**Europäisches Patentamt**

**European Patent Office**

**Office européen des brevets**

(11) Veröffentlichungsnummer: **0 210 458 B1**

(19)

(12) **EUROPÄISCHE PATENTSCHRIFT**

(45) Veröffentlichungstag der Patentschrift: **23.12.92**

(21) Anmeldenummer: **86109006.6**

(22) Anmeldetag: **02.07.86**

(51) Int. Cl.⁵: **C04B 35/02**, C04B 35/04, C04B 35/06, C04B 35/42

Die Akte enthält technische Angaben, die nach dem Eingang der Anmeldung eingereicht wurden und die nicht in dieser Patentschrift enthalten sind.

(54) **Grobkeramischer Formkörper, sowie dessen Verwendung.**

(30) Priorität: **02.08.85 DE 3527789**

(43) Veröffentlichungstag der Anmeldung:
**04.02.87 Patentblatt 87/06**

(45) Bekanntmachung des Hinweises auf die Patenterteilung:
**23.12.92 Patentblatt 92/52**

(84) Benannte Vertragsstaaten:
**AT BE DE FR GB IT NL SE**

(56) Entgegenhaltungen:
**AT-B- 353 154
AT-B- 373 229
DE-A- 3 347 250
DE-A- 3 421 529**

**Winnacker-Küchler Chemische Technologie B. 3, S. 205 (1983)**

(73) Patentinhaber: **Refratechnik GmbH
Rudolf-Winkel-Strasse 1
W-3400 Göttingen(DE)**

(72) Erfinder: **Weibel, Guido, Dipl.-Ing.
Kleine Strasse
W-3515 Dankelshausen(DE)**
Erfinder: **Bartha, P., Dr.
Greifswalderstrasse 2
W-3406 Bovenden(DE)**

(74) Vertreter: **Goddar, Heinz J., Dr. et al
FORRESTER & BOEHMERT Franz-
Joseph-Strasse 38
W-8000 München 40(DE)**

**Beschreibung**

Die Erfindung betrifft einen grobkeramischen Formkörper sowie die Verwendung eines derartigen Formkörpers.

Grobkeramische Formkörper, insbesondere basische feuerfeste Materialien auf der Basis von Magnesit, Dolomit, Chromit und/oder Spinell, werden bei allen Hochtemperaturprozessen mit basischem Schlackenangriff, wie z. B. bei der Zement-, Kalk-, Dolomit-, Eisen- und Stahlerzeugung sowie bei der NE-Metallerzeugung und in der Glasindustrie als Auskleidungsmaterial für Öfen und Gefäße verwendet. Bei hoher Feuerfestigkeit und guter chemischer Beständigkeit weisen diese Materialien bzw. Formkörper jedoch eine hohe Sprödigkeit, d.h. einen hohen Elastizitätsmodul auf, woraus hinsichtlich Wärmedehnungsspannungen, mechanischer Beanspruchung und Temperaturwechselbeständigkeit (TWB) negative Einflüsse auf die Laufzeit resultieren. Der Einfluß des E-Moduls auf die Wärmedehnungsspannungen läßt sich gemäß Hook mit folgender Gleichung beschreiben:

$$\sigma_D = E_D \cdot \Delta \alpha \qquad (1)$$

$\sigma_D$ :  Druckspannung [N/mm$^2$]
$E_D$ :  E-Modul [kN/mm$^2$]
$\Delta \delta$ :  Temperaturdifferenz [$^\circ$C]
$\alpha$ :  Wärmedehnungskoeffizient [$^\circ$C$^{-1}$]

Der Einfluß des E-Moduls auf die mechanische Beanspruchung, wie sie beispielsweise in Drehrohröfen auftritt, läßt sich gemäß Meedom mittels folgender Gleichung beschreiben:

$$\sigma_D = \frac{3}{4} \frac{w_s \cdot h}{R_o^2} \cdot E_D \qquad (2)$$

$\sigma_D$ :  Druckspannung [N/mm$^2$]
$w_s$ :  Ofenmantelovalität [mm]
$h$ :  Feuerfestfutterstärke [mm]
$R_o$ :  Ofenmanteldurchmesser [mm]
$E_D$ :  E-Modul [kN/mm$^2$]

Der Einfluß des E-Moduls auf die TWB ergibt sich aus folgender Gleichung :

$$R_{TWB} = \frac{\sigma (1 - \mu)}{E_D} \cdot \frac{\alpha \cdot \lambda}{C \rho} \qquad (3)$$

$R_{TWB}$ :  Temperaturwechselwiderstand
$\sigma$ :  Festigkeit [N/mm$^2$]
$\mu$ :  Querkontraktionszahl
$E_D$ :  E-Modul [kN/mm$^2$]
$\alpha$ :  Wärmedehnungskoeffizient [$^\circ$C$^{-1}$]
$\lambda$ :  Wärmeleitfähig [KJ/mh $^\circ$C]
$C$ :  Spez. Wärme [kJ/kg $^\circ$C]
$\rho$ :  Rohdichte [g/cm$^3$]

Die vorstehenden drei Gleichungen zeigen, daß ein niedriger E-Modul für das Laufzeitverhalten basischer Feuerfestmaterialien von erheblicher Bedeutung ist.

Es ist bereits bekannt, die hohen Wärmedehnungsspannungen basischer Feuerfestprodukte bzw. Formkörper durch Verlegen der Feuerfeststeine mit dazwischen angeordneten Mörtelfugen, metallischen Einlagen, wie Blechen, Lochblechen oder Netzen zu reduzieren. Metallische Einlagen sowie wärmedehnungsspannungsreduzierende Steinformate sind Gegenstand zahlreicher Veröffentlichungen, z. B. ZKG 7 - (1976), S. 298 - 304.

Zur Verbesserung der TWB basischer, feuerfester Materialien wurden in der Vergangenheit zahlreiche Maßnahmen ergriffen. Einmal wurde hierzu die Kornverteilung modifiziert. J.H. Chesters ("Herstellung und Eigenschaften basischer und neutraler Baustoffe (außer Dolomiterzeugnissen)", in Harders/Kienow, Feuerfestkunde - Herstellung, Eigenschaften und Verwendung feuerfester Baustoffe, Springer-Verlag 1960, Kap. 5.5, S. 754 u. 755) stellte fest, daß die TWB von Chrommagnesiasteinen durch die sogenannte Mischungslücke, d.h. die Minimierung des Mittelkornanteils (0,2 bis 0,6 mm) deutlich verbessert werden kann. Ein entscheidender Nachteil der Mischungslücke ist jedoch einerseits, daß ihre Wirkung nur in Verbindung mit einer TWB-Komponente wie z. B. Magnesia in Chrommagnesiasteinen bzw. Chromerz in Magnesiachromsteinen ausreichend hoch ist, während sich andererseits bei Anwendung der Mischungslücke aber auch keine optimale Kornpackungsdichte erreichen läßt, wie sie zum Erreichen eines hohen Infiltrationswiderstandes gegenüber Schlacken erwünscht ist. Haase und Petermann ("Untersuchungen über die Temperaturwechselfestigkeit, insbesondere über die Dehnungseigenschaften feuerfester Baustoffe", Silikattechnik 7, Nr. 12, 1956, S. 505 - 510, VEB Verlag Technik/Berlin) schlagen eine Kornverteilung gemäß Litzow und ein Brennen der Steine bei niedriger Temperatur vor. Entscheidender Nachteil hierbei ist jedoch, daß die Anwendungstemperatur dieser Steine in der Regel weit oberhalb der vorgeschlagenen niedrigen Brenntemperatur liegt, wodurch es zur Nachsinterung der Steinköpfe und somit zum Verlust der TWB kommt.

Weiterhin ist deshalb zur Verbesserung der TWB basischer feuerfester Materialien bereits der Zusatz von Chromerz beschrieben worden (z.B. Harders Kienow, Feuerfestkunde Herstellung Eingenschaften und Verwendung feuerfester Baustoffe, Springer-Verlag 1960, Kap. 5.5, S. 755), wobei insbesondere die Chromerzmenge und die optimale Kornfraktion des Chromerzes definiert wurden. Um eine ausreichende TWB zu erlangen, sind dabei Chromerzmengen zwischen 15 und 30 Gew.-% notwendig, in Kombination mit der Mischungslücke jedoch immer noch mindestens 10 Gew.-%. Hierdurch erreichen TWB-optimierte Steinqualitäten E-Moduli bis herunter zu 25 kN/mm$^2$, verglichen mit dem etwa 60 bis 100 kN/mm$^2$ reiner Magnesiasteine. Die Wirkung des Chromerzes als TWB-Komponente wird von W. Späth ("Zur Temperaturwechselbeständigkeit feuerfester Stoffe", RADEX RUNDSCHAU, Jahrgänge 1960 - 1961, S. 673 - 688 Österreichisch-Amerikanische Magnesit Aktiengesellschaft, Radenthein/Kärnten) durch Gefügeverspannung aufgrund unterschiedlicher Wärmedehnungskoeffizienten zwischen Magnesia und Chromerz erklärt. Entscheidende Nachteile der Anwendung von Chromerz als TWB-Komponente sind jedoch, daß bei einem Wechsel der Ofenatmosphäre (Redox) Materialermüdungen stattfinden (wegen des Vorhandenseins von Metallen, die in mehreren Wertigkeitsstufen auftreten können, nämlich Eisen und Chrom), daß durch Oxidation unter der katalytischen Wirkung von Alkalien das in Chromerz in dreiwertiger Form vorliegende Chromoxid in toxisches sechswertiges Chromoxid überführt wird, mit allen damit unter arbeitshygienischen und entsorgungstechnischen Gesichtspunkten verbundenen Problemen, daß das Chromerz zum Teil erhebliche Mengen an Gangart enthält, wodurch bei Verwendung hochreiner synthetischer Magnesia die dabei ansonsten mögliche genaue Einstellung des Chemismus unmöglich wird, und daß schließlich durch Schlackeninfiltration bevorzugt das Chromerz angegriffen und somit die TWB-Komponente aufgelöst wird, woraus praktisch ein Verlust der TWB resultiert.

Es ist deshalb bereits frühzeitig versucht worden (AT-PS 158 208), Magnesiasteinen zur Verbesserung der TWB Tonerdepulver, Korund und Aluminiumpulver zuzusetzen, wobei beim Steinbrand in situ Spinell gebildet wird. Der dabei gebildete Spinell ist in der Matrix konzentriert und zum Teil nicht ausreagiert, so daß beim Angriff solcher Steine durch Schlacken bevorzugt die für die Festigkeit entscheidende Matrix zerstört wird. Darüber hinaus ist die erzielbare TWB-Verbesserung begrenzt, da der für eine entscheidende Verbesserung notwendige Anteil an Al$_2$O$_3$ bei weit über 8 Gew.-% liegen müßte, was wegen zu starken Wachsens des Steines infolge Volumenvergrößerung in der Matrix jedoch nicht möglich ist, da ansonsten Maßhaltigkeit und mechanische Festigkeit zu niedrig und die Porosität zu hoch werden.

Eine erhebliche Verbesserung sowohl der TWB als auch der chemischen Beständigkeit von Magnesiasteinen konnte erst durch Hinzusetzen von vorsynthetisiertem Magnesiumaluminiumspinell in Form von Sinter- oder Schmelzspinell erreicht werden, wobei die üblichen Zusatzmengen zwische 15 und 25 Gew.-% liegen. Dadurch läßt sich der E-Modul bis auf etwa 20 kN/mm$^2$ senken, wobei die Wirkung dieser TWB-Komponente ebenfalls auf eine Gefügeverspannung zurückzuführen ist. Obwohl durch Verwendung vorsynthetisierten Magnesiumaluminiumspinells die TWB von etwa 60 auf 100 Abschreckungen angehoben werden konnte und auch die chemische Beständigkeit gegenüber Alkali- und Schlackenangriff deutlich verbessert werden konnte, bestehen nach wie vor die Nachteile der immer noch vorhandenen Reaktionsbereitschaft der TWB-Komponente mit Schlacken und des dadurch möglichen TWB-Verlustes, der Notwendigkeit, die Steine mit Mörtel oder Metalleinlagen zu verlegen sowie schließlich die Empfindlichkeit gegen Ofenmantelovalität in Drehrohröfen.

In der DE-PS 22 49 814 ist ein Formkörper der gattungsgemäßen Art beschrieben, beim dem als TWB-Komponente Zirkondioxid verwendet wird. Eine optimale TWB durch Zirkondioxidzusatz wird danach bei rund 3 Gew.-% erreicht. Entscheidender Nachteil ist hierbei, daß die TWB bei der optimalen Zirkondioxidzusatzmenge maximal 60 Abschreckungen erreicht, bei einem E-Modul von ca. 25 kN/mm$^2$, wobei die Anzahl der erreichbaren Abschreckungen durch weitere Zirkondioxidzusetzung wieder absinkt.

Weiterhin ist es bereits bekannt, eine sehr hohe TWB bei Magnesiacarbonsteinen zu erzielen, wobei die hohe TWB dabei auf die hohe Wärmeleitfähigkeit des Graphitanteiles zurückzuführen ist, wie aus Gleichung (3) hervorgeht. Entscheidender Nachteil derartiger Steine ist allerdings , daß ihr Einsatz auf Aggregate, in denen reduzierende Ofenatmosphäre vorherrscht, beschränkt ist und ihre hohe Wärmeleitfähigkeit für eine Vielzahl von Anwendungszwecken unerwünscht ist.

Schließlich wurde zwar bei der Entwicklung dichter oxidkeramischer Hochtemperaturwerkstoffe festgestellt, daß durch Teilstabilisierung von Zirkondioxid bzw. durch Zirkondioxid zusätze in Aluminiumoxidwerkstoffen die TWB verbessert werden kann, wobei mikroskopische Analysen ergaben, daß dafür ein homogen im Gefüge verteiltes MR-System bzw. die damit erreichte Herabsetzung des E-Moduls verantwortlich gemacht werden kann, wie Hasselmann ("Rolle der Bruchzähigkeit bei der Temperaturwechselbeständigkeit feuerfester Erzeugnisse" Berichte der Deutschen Keramischen Gesellschaft, 1977, Bd. 54, Verlag der Deutschen Keramischen Gesellschaft. 5340 Bad Honnef 1, S. 195 - 201) beschrieben hat, jedoch ist eine Übertragung der dort beschriebenen Maßnahmen auf Feuerfeststeine bzw. grobkeramische Formkörper nicht möglich (P. Tassot, "Phasenbeziehungen in den Systemen $Al_2O_3$-$Cr_2O_3$-$ZrO_2$, $MgO$-$Cr_2O_3$-$ZrO_2$ und $MgO$-$Al_2O_3$-$ZrO_2$ zwischen 1600 und 1900° C und ihre Bedeutung für die Herstellung hochfeuerfester Werkstoffe" Dissertation an der Christian-Albrechts-Universität zu Kiel, 1983). Es hat sich nämlich gezeigt, daß die in dichten Oxidkeramiken angewendeten Verfahren sich nicht auf das heterogene Gefüge grobkeramischer basischer Formkörper übertragen lassen. So kann auch der Zusatz sehr feiner Metallpartikel mit Korndurchmessern unterhalb 10 $\mu$m, wie von Rossi (Ronald C. Rosse "Thermal-Shock-Resistant Ceramic Composites" The American Ceramic Society BULLETIN, 1969, Bd. 48 4055 North High Street, Columbus, Ohio 43214, S. 736 u. 737) für heißgepreßtes Magnesiumoxid vorgeschlagen, weder die TWB noch den E-Modul der daraus hergestellten grobkeramischen Formkörper verändern.

In dem Übersichtswerk Winnacker-Küchler "Chemische Technologie", 4. Auflage (1983), Band 3, S. 205, wird herausgestellt, daß die Temperaturwechselbeständigkeit von Feuerfeststeinen verbessert werden kann, wenn man in die Steine schon bei der Herstellung Mikrorisse einbaut, die sich bei der Wechselbeanspruchung in einem bestimmten Verformungsbereich nicht verlängern. Chromerzhaltige Magnesiasteine werden als Beispiele temperaturwechselbeständiger Steine geführt, jedoch hat sich gezeigt, daß deren Materialfestigkeit regelmäßig nicht für Anwendungen mit hoher Beanspruchung ausreicht.

In der AT-A 336 487 wird ein feuerfester Stein beschrieben, der aus einer Mischung aus Chromerz und einem Magnesiaträger besteht, wobei eisenreiches Chromerz mittlerer Körnung mit einem $Cr_2O_3$-Gehalt von 44 bis 52 Gew.-% und einem $SiO_2$-Gehalt von 0.3 bis 3 Gew.-% eingesetzt wird. Die Ausgangsmaterialien werden unter Zugabe eines Bindemittels gemischt, brikettiert und getrocknet. Anschließend wird bei einer Temperatur von mindestens 2000° C der Sinterbrand durchgeführt, wonach beim Ankühlen des Sintermaterials sich die Chromerzbestandteile praktisch vollständig als neugebildeter Spinell in der Magnesiagrundmasse ausscheiden sollen. Durch den hohen Zusatz $Cr_2O_3$ wird ein Matrixspinell gebildet, dem verstärkte Infiltrationsneigungen zuzuschreiben sind, welche zur Steinzerstörung führen können. Solche Steine sind für hochbeanspruchte Auskleidungsteile, wie sie beispielsweise für Zementdrehrohröfen erforderlich sind, weniger geeignet.

Der Erfindung liegt die Aufgabe zugrunde, einen grobkeramischen Formkörper zu schaffen, der insbesondere für Feuerfestzwecke geeignet ist und bei dem die Resistenz gegen mechanische und thermische Beanspruchungen noch weiter verbessert ist und auch bei Schlackenangriff nicht beeinträchtigt wird.

Erfindungsgemäß wird diese Aufgabe durch die im Patentanspruch 1 aufgeführten Merkmale gelöst. Besonders bevorzugte Ausführungsformen des grobkeramischen Formkörpers nach der Erfindung sind Gegenstand der Patentansprüche 2 bis 6. Die erfindungsgemäße Verwendung des grobkeramischen Formkörpers nach der Erfindung als Feuerfestmaterial, insbesondere zur Ausmauerung von Drehrohröfen oder dergleichen, ist Gegenstand des Patentanspruches 7.

Es sei angemerkt, daß die Angaben bezüglich des Gehaltes der Formkörpergesamtmischung an MR-Bildner, z. B. 3 - 10 Gew.% bei Verwendung von Oxiden, sich bei Verwendung von Suboxiden, Hydroxiden und/oder Salzen für $R^{2+}$ und/oder $R^{3+}$ auf das entsprechende Massenäquivalent bezogen auf Oxide bezieht. Bei gleichzeitiger Verwendung konventioneller, die Temperaturwechselbeständigkeit steigernder Komponenten (TWB-Komponenten) beträgt der Anteil an MR-Bildner im übrigen vorzugsweise zwischen 0,25 und 5 Gew.-% der Formkörpergesamtmischung.

Der Erfindung liegt die überraschende Erkenntnis zugrunde, daß es gelingt, einen Formkörper bzw. Feuerfeststein der eingangs beschriebenen Art zu schaffen, der aufgrund eines geringen E-Moduls sowohl gegen mechanische und thermische Beanspruchung resistent ist als auch durch Schlackenangriff seine hohe TWB nicht verliert, daß im Formkörpergefüge homogen ein MR-Bildner weit größeren Durchmessers als im Falle der dichten oxidkeramischen Hochtemperaturwerkstoffe verteilt wird, wobei der Mechanismus entweder darauf beruht, daß dieser während des Brennprozesses bzw. Steinsinterbrandes eine Expansion der betreffenden Partikel, also eine volumenvergrößernde Reaktion, auslöst, wobei in den benachbarten anderen Partikeln dann das Mikrorißsystem entsteht, oder aber eine starke Schwindung in der Mehlfraktion hervorgerufen wird, die wiederum zu dem beschriebenen Mikrorißsystem in den anderen Partikeln des Gemenges führt. Der erzielte Effekt ist geradezu dramatisch, da sich durch die erfindungsgemäßen Maßnahmen der E-Modul von grobkeramischen Formkörpern bzw. Feuerfeststeinen der eingangs genannten Art bis herunter zu 12,5 kN/mm$^2$ reduzieren läßt.

Nachstehend ist die Erfindung an Hand eines Ausführungsbeispieles unter Bezugnahme auf die Zeichnung im einzelnen erläutert. Dabei zeigt:

Fig. 1    bei dem gewählten Ausführungsbeispiel den erzielten E-Modul in Abhängigkeit von der Mikrorißbildnermenge;

Fig. 2    den Temperaturwechselwiderstand (KDF/E-Modul) in Abhängigkeit von der Mikrorißbildnermenge;

Fig. 3    KDF in Abhängigkeit von der Mikrorißbildnermenge; und

Fig. 4    KDF in Abhängigkeit vom mittleren Korndurchmesser des Mikrorißbildners.

Bei dem gewählten Beispiel wurden Magnesia und Tonerde gemäß der nachfolgenden Tabelle 1 in einem dem Magnesiumaluminat entsprechenden stöchiometrischen Verhältnis gemischt und zu Gemengepartikeln zwischen 0,1 bis 3 mm geformt:

Tabelle 1

|  | MAGNESIA | Tonerde |
|---|---|---|
| MgO | 97,0 | - |
| Al$_2$O$_3$ | 0,2 | 99,3 |
| CaO | 1,8 | - |
| SiO$_2$ | - | 0,04 |
| Fe$_2$O$_3$ | 0,6 | 0,03 |
| Na$_2$O | - | 0,3 |
| Säureunlösliches | 0,4 |  |

Ein Grundversatz aus Sintermagnesia mit dem Maximalkorn von 4 mm und einer Kornverteilung gemäß Fuller-Kurve wurde mit den erfindungsgemäßen MR-Gemengepartikeln in Anteilen von 3 bis 9 Gew.-% unterschiedlicher Kornfraktionen versetzt. Die Mischungen wurden mit der erforderlichen Menge in Ligninsulfonat versetzt, mit einem spezifischen Preßdruck von ≧ 1200 kp/cm$^2$ verpreßt, getrocknet und bei einer Sintertemperatur gebrannt, die oberhalb der Bildungstemperatur des Magnesiumaluminium-Spinells lag und in dem hier dargestellten Ausführungsbeispiel bei 1650° C lag.

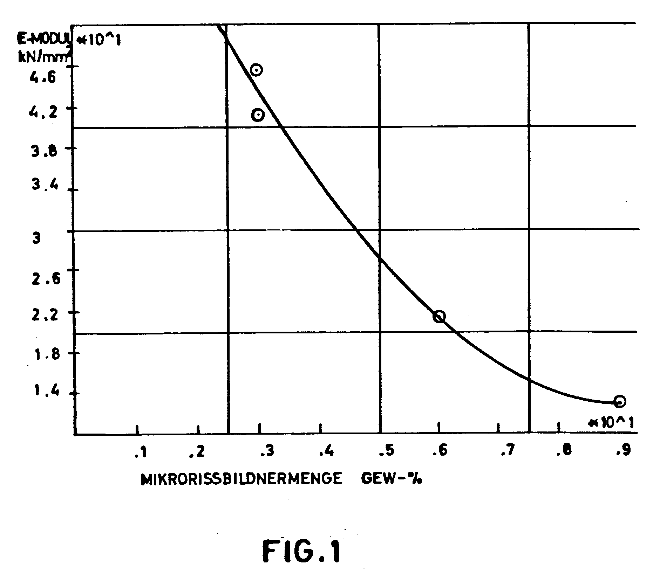

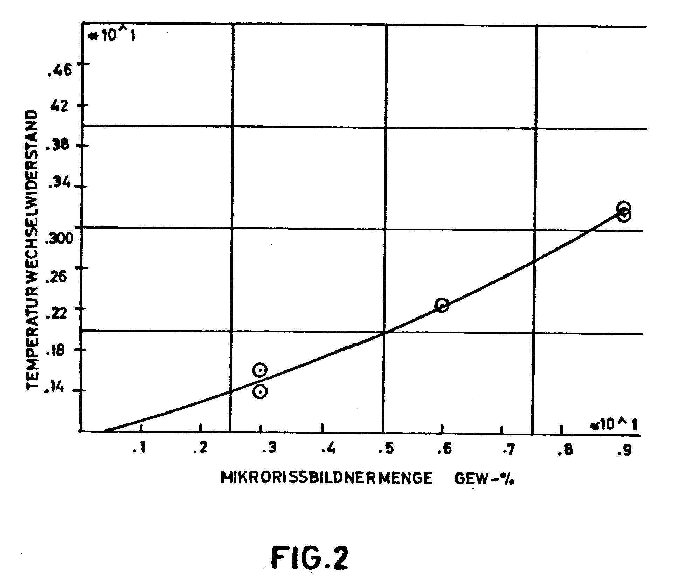

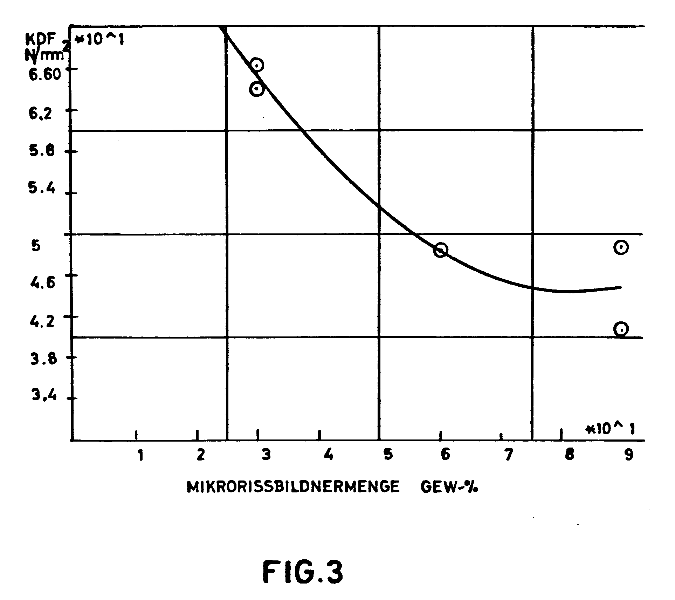

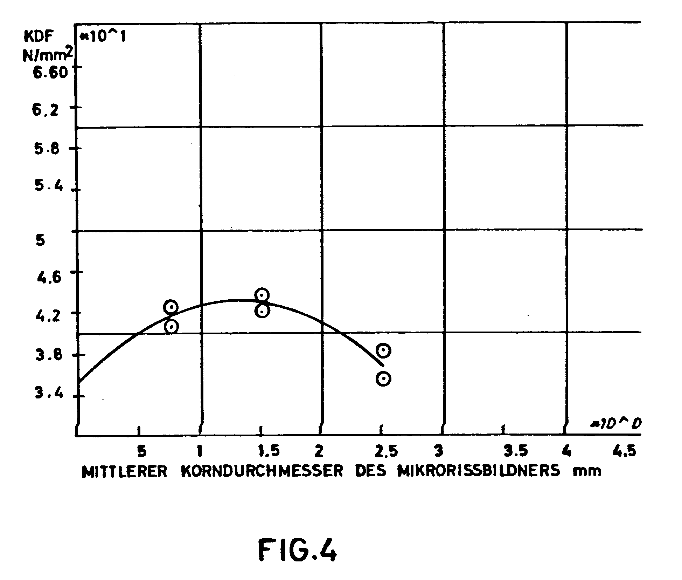

Die erreichten physikalischen Eigenschaften als Funktion der Zusatzmenge und der Kornfraktion des MR-Bildners sind in den Figuren 1 bis 4 dargestellt. Diesen ist zu entnehmen, daß der E-Modul bzw. die KDF in weiten Grenzen variiert werden können und direkt von der Menge des erfindungsgemäß verwendeten MR-Bildners abhängen. Unter der Randbedingung einer Mindestkaltdruckfestigkeit von 35 N/mm$^2$ für basische Feuerfestprodukte läßt sich durch eine maximale Zusatzmenge von 10 Gew.-% des erfindungsgemäßen MR-Bildners der E-Modul bis auf 12,5 kN/mm$^2$ reduzieren. Im Vergleich zu konventionellen Steinqualitäten mit optimierter TWB bedeutet dies eine E-Modulreduzierung auf beinahe die Hälfte der bisher für erzielbar gehaltenen Werte. Die TWB der Steine mit einem E-Modul von rund 12,5 kN/mm$^2$ war so hoch, daß nach 180 Abschreckungen von 1200° C in einem kalten Preßluftstrom noch kein Bruch erfolgte. Der danach ermittelte Festigkeitsabfall lag unterhalb von 25 %.

Ein wesentlicher Vorteil des MR-Systems nach der Erfindung ist auch, daß selbst bei Reaktionen des MR-Bildners mit Schlacken die TWB nicht negativ beeinflußt wird, da der MR-Bildner nach Erzeugung eines im Steingefüge homogen verteilten Mikrorißsystems während des Sinterbrandes keine Bedeutung mehr hat. Die beispielsweise durch einen 10 %igen MR-Bildneranteil hervorgerufene E-Modulreduktion läßt aber auch eine Knirschverlegung solcher Steine zu, da sich gemäß Gleichung (1) die Wärmedehnungsspannungen proportional dem E-Modul verringern. Der daraus resultierende Vorteil ist eine schnelle und billige Zustellung von Ofenaggregaten, da auf Mörtel bzw. Metalleinlagen, deren Anteil an den Zustellkosten zwischen 5 und 7 % betragen kann, vollständig verzichtet werden kann, obwohl natürlich auch eine Verlegung erfindungsgemäß hergestellter Feuerfeststeine mit gleichzeitiger Mörtelverwendung etc. möglich ist. Ein weiterer Vorteil ergibt sich aus Gleichung (2), da Steinqualitäten mit so geringem E-Modul, wie dieser erfindungsgemäß erzielbar ist, auch bei hoher Mantelovalität von Drehrohröfen noch keine Probleme durch Abplatzen etc. mit sich bringt.

Ähnliche Ergebnisse wie vorstehend beschrieben lassen sich auch mit picrochromit- und magnesiaferritbildenden MR-Gemengepartikeln sowie Mischkristallen der allgemeinen Formel $R^{2+}O . R_2^{3+} O_3$ erzielen, wobei $R^{2+}$ Fe und/oder Mg und $R^{3+}$ Fe, Al und/oder Cr bedeuten.

Dadurch, daß der rechnerische Spinell-Anteil bzw. Mischspinell Anteil im MR-erzeugenden Gemenge stöchiometrisch ist, wird vermieden, daß die Wirkung stark reduziert wird und nur durch einen unerwünschten hohen Anteil MR-Bildner bezogen auf die Formkörper-Gesamtmischung, kompensiert werden kann. Selbstverständlich können die erfindungsgemäßen MR-Gemengepartikel nicht nur in reinen Magnesia-, Dolomit-, Spinellsteinen, sondern auf in den beschriebenen konventionellen Stein mit TWB-Bildnern, wie Chromerz, Tonerde, Spinell, Zirkonoxid usw. eingesetzt werden. Es ist jedoch festzuhalten, daß die Gesamtmenge zur Erzielung einer vorgegebenen TWB oberhalb der Menge des reinen MR-Bildners liegt, Der Nachteil dieser Kombination ist daher, daß die Gesamtmenge an TWB-Bildnern (also chemisch labilerer Bestandteile) lediglich unnötig hoch wird. Die labilere Komponente läßt sich jedoch anteilmäßig durch das erfindungsgemäße MR-System auf ein Minimum senken.

Erfindungsgemäß hergestellte Formkörper bzw. Feuerfeststeine lassen sich überall dort vorteilhaft einsetzen, wo starke Temperaturwechsel und/oder mechanische Spannungswechsel in Kombination mit chemischer Beanspruchung durch basische Schlacken auftreten. Dies sind beispielsweise Sinter-und Übergangszonen von Drehrohröfen der Steine-und Erdenindustrie, Eisen- und NE-Metallindustrie sowie Schmelz-und Behandlungsgefäße der Eisen- und NE-Metallindustrie sowie Stranggußkeramik.

**Patentansprüche**

1. Grobkeramischer Formkörper auf der Basis von Magnesia, gebranntem Dolomit, Chromit und/oder Spinell mit einem im Formkörpergefüge im wesentlichen homogen verteilten Mikrorißsystem, mit den folgenden Merkmalen:

a) Der Formkörper weist einen Gehalt an einer TWB-verbessernden Komponente auf, die aus 0,5 bis 10 Gewichts-%, gerechnet in oxiden, von der für die Herstellung des Formkörpers verwendeten Formkörperausgangsmischung zugegebenen Gemengepartikeln eines Mikrorißbildners (MR-Bildners) besteht;

b) Die Gemengepartikel des MR-Bildners liegen in der Kornfraktion von 0,1 bis 3,0 mm, vorzugsweise bis 1,5 mm, in der Formkörperausgangsmischung vor;

c) die einzelnen Gemengepartikel des MR-Bildners weisen ein spinellbildendes Gemenge zur Bildung wenigstens eines Spinells auf;

d) die einzelnen Gemengepartikel des MR-Bildners enthalten die spinellbildenden Gemengekomponenten in stöchiometrischen Verhältnis

e) die einzelnen Gemengepartikel des MR-Bildners bilden während des Brennprozesses unter Expansion durch Verbindungsbildung Minerale des Systems $R^{2+}O \cdot R_2^{3+} O_3$, in dem $R^{2+}$ Mg und/oder Fe und $R^{3+}$ Al,Cr und/oder Fe ist/sind, wobei die einzelnen Gemengepartikel als Metalle sowie als Oxide, Suboxide, Hydroxide und/oder Salze vorliegen können.

2. Formkörper nach Anspruch 1, dadurch gekennzeichnet, daß die Formkörperausgangsmischung einen Gehalt an MR-Bildner von 2.5 bis 10 Gewichts-%, gerechnet in oxiden, aufweist.

3. Formkörper nach Anspruch 2, dadurch gekennzeichnet, daß die Formköperausgangsmischung einen Gehalt an MR-Bildner von 5 bis 8 Gewichts-%, gerechnet in oxiden, aufweist.

4. Formkörper nach einem der vorangehenden Ansprüche, dadurch gekennzeichnet, daß der MR-Bildner wenigstens einen Oxidbildner als Metall, Metalloxid, Metallsuboxid, Metallhydroxid und/oder Metallsalz aufweist, der während des Brennprozesses in einem ersten Oxidbildungsschritt zunächst unter Expansion Oxide der Metalle Al, Mg, Fe und/oder Cr und dann in einem Zweiten Spinellbildungsschritt Spinell bildet.

5. Formkörper nach Anspruch 4, dadurch gekennzeichnet, daß die Formkörperausgangsmischung einen Gehalt an MR-Bildner aus den Metallen Al, Mg, Fe und/oder Cr und/oder deren Salzen von 0,5 bis 5 Gew.-%, gerechnet in oxiden, aufweist.

**6.** Formkörper nach einem der vorangehenden Ansprüche, dadurch gekennzeichnet, daß der MR-Bildner in der Kornfraktion 0,1 bis 1 mm, vorzugsweise 0.1 bis 0,5 mm, in der Formkörperausgangsmischung vorliegt.

**7.** Verwendung des grobkeramischen Formkörpers nach einem der vorangehenden Ansprüche als Feuerfestmaterial, insbesondere zur Ausmauerung von Drehrohröfen oder dergleichen.

**Claims**

**1.** Ordinary ceramic compact based on magnesia, burnt dolomite, chromite and/or spinel with a microcrack system distributed essentially homogeneously in the compact's structure, exhibiting the following features:

a) The compact includes an amount of a component to improve thermal shock resistance (TSR), comprising from 0.5 to 10 percent by weight, calculated in oxides, of mechanical mixture particles of a microcrack-forming agent (MC-former) added to the compact's starting mix to fabricate the compact;

b) the particles of the MC-former mix are from the 0.1 to 3.0 mm size range, preferably up to 1.5 mm, in the compact's starting mixture;

c) the various particles of the MC-former mix include a spinel-forming mix to form at least one spinel;

d) the various particles of the MC-former mix contain the spinel-forming mix components in a stoichiometric ratio;

e) during the firing process, the various particles of the MC-former mix expand by forming compounds to form minerals of the $R^{2+}O \cdot R_2^{3+}O_3$ system, in which $R^{2+}$ is Mg and/or Fe and $R^{3+}$ is Al, Cr and/or Fe, and the various particles of the mixture may be in the form of metals and their oxides, suboxides, hydroxides and/or salts.

**2.** Compact according to claim 1, characterised in that the starting mix for the compact includes a quantity of MC-former of 2.5 to 10 percent by weight, calculated in oxides.

**3.** Compact according to claim 2, characterised in that the starting mix for the compact includes a quantity of MC-former of 5 to 8 percent by weight, calculated in oxides.

**4.** Compact according to any of the preceding claims, characterised in that the MC former includes at least one oxide former as a metal, metal oxide, metal suboxide, metal hydroxide and/or metal salt, which during the firing process first expands in a first oxide-forming stage to form oxides of the metals Al, Mg, Fe and/or Cr and then forms spinel in a second spinel-forming stage.

**5.** Compact according to claim 4, characterised in that the starting mix for the compact includes a quantity of MC-former from the metals Al, Mg, Fe and/or Cr and/or the salts thereof of 0.5 to 5 percent by weight, calculated in oxides.

**6.** Compact according to any of the preceding claims, characterised in that the MC-former is in the 0.1 to 1 mm grain-size range, preferably 0.1 to 0.5 mm, in the starting mix for the compact.

**7.** Use of the ordinary ceramic compact according to any of the preceding claims as a refractory material, particularly for lining rotary tubular kilns or the like.

**Revendications**

**1.** Corps façonné en grosse céramique à base de magnésie, dolomie calcinée, chromite et/ou spinelle comportant un système de microfissures réparti de manière sensiblement uniforme dans sa structure, ayant les caractéristiques suivantes :

a) le corps façonné contient un constituant améliorant la résistance aux changements de température qui est constitué de 0,5 à 10 % en poids, calculés en oxydes, de particules d'alliage d'un formateur de microfissures ajoutées au mélange de départ du corps façonné utilisé pour la fabrication de celui-ci,

b) les particules d'alliage du formateur de microfissures sont présentes dans le mélange de départ du corps façonné dans la classe granulaire de 0,1 à 3,0 mm, de préférence à 1,5 mm,

c) les différentes particules d'alliage du formateur de microfissures présentent un alliage formateur de spinelle pour la formation d'au moins une spinelle,

d) les différentes particules d'alliage du formateur de microfissures contiennent les constituants d'alliage formateur de spinelle en rapport stoechiométrique,

e) les différentes particules d'alliage du formateur de microfissures forment pendant la cuisson, avec expansion, par formation de liaisons, des minéraux du système $R^{2^+}O . R_2^{3^+}O_3$, dans lequel $R^{2^+}$ est Mg et/ou Fe et $R^{3^+}$ est Al, Cr et/ou Fe, les différentes particules d'alliage pouvant se présenter sous forme de métaux ainsi que d'oxydes, de sous-oxydes, d'hydroxydes et/ou de sels.

2. Corps façonné selon la revendication 1, caractérisé par le fait que le mélange de départ du corps façonné a une teneur en formateur de microfissures, calculée en oxydes, de 2,5 à 10 % en poids.

3. Corps façonné selon la revendication 2, caractérisé par le fait que le mélange de départ du corps façonné a une teneur en formateur de microfissures, calculée en oxydes, de 5 à 8 % en poids.

4. Corps façonné selon l'une des revendications précédentes, caractérisé par le fait que le formateur de microfissures présente au moins un formateur d'oxydes sous forme de métal, oxyde métallique, sous-oxyde métallique, hydroxyde métallique et/ou sel métallique qui, pendant la cuisson, forme dans une première phase, de formation d'oxydes, d'abord, avec expansion, des oxydes des métaux Al, Mg, Fe et/ou Cr, et ensuite, dans une deuxième phase, de formation de spinelle, de la spinelle.

5. Corps façonné selon la revendication 4, caractérisé par le fait que le mélange de départ du corps façonné a une teneur en formateur de microfissures constitué des métaux Al, Mg, Fe et/ou Cr et/ou de leurs sels, calculée en oxydes, de 0,5 à 5 % en poids.

6. Corps façonné selon l'une des revendications précédentes, caractérisé par le fait que le formateur de microfissures est présent dans le mélange de départ du corps façonné dans la classe granulaire de 0,1 à 1mm, de préférence de 0,1 à 0,5 mm.

7. Utilisation du corps façonné en grosse céramique selon l'une des revendications précédentes comme matériau réfractaire, en particulier pour le maçonnage de fours tubulaires tournants ou d'appareils analogues.

FIG.1

FIG.2

**FIG.3**

FIG.4